# EUROPÄISCHE PATENTSCHRIFT

(11) **EP 2 048 952 B1**
(45) Veröffentlichungstag und Bekanntmachung des Hinweises auf die Patenterteilung: **18.08.2010**
(21) Anmeldenummer: 07764877.2
(22) Anmeldetag: 27.06.2007
(51) Int. Cl.: A01N 53/00

(54) **FLÜSSIGFORMULIERUNG VON PYRETHROIDEN**
LIQUID FORMULATION OF PYRETHROIDS
FORMULATION LIQUIDE À BASE DE PYRÉTHROIDES

(30) Priorität: 08.07.2006 EP 06014209
(43) Veröffentlichungstag der Anmeldung: 22.04.2009
(73) Patentinhaber: Bayer CropScience AG, 40789 Monheim (DE)
(72) Erfinder: DAVIES, Lorna, Elizabeth, Kansas City, Kansas 64120-0013 (US); BAUR, Peter, 86938 Schondorf (DE); THIELERT, Wolfgang, 51519 Odenthal (DE); DICKMANN, Richard, 40489 Düsseldorf (DE); KÜHNHOLD, Jürgen, 51467 Bergisch Gladbach (DE); HUNGENBERG, Heike, 40764 Lagenfeld (DE)
(86) Internationale Anmeldenummer: PCT/EP2007/005669
(87) Internationale Veröffentlichungsnummer: WO 2008/006464

(56) Entgegenhaltungen:
- EP-A- 0 257 286
- EP-A1- 0 500 401
- WO-A-96/01047
- WO-A2-01/70024
- US-A1- 2004 063 583

## Beschreibung

Es sind bereits agrochemische Formulierungen von Pyrethroiden in Form von emulgierbaren Konzentraten (EC-Formulierungen) bekannt. So beschreibt z.B. WO 1996/001047 EC-Formulierungen, die im Gegensatz zu den erfindungsgemäßen Zusammensetzungen allerdings Ester, Pflanzenöle oder Pflanzenölester als Lösemittel enthalten. US 2004-0063583 A1 offenbart Pyrethroid-EC-Formulierungen, allerdings werden weder Ethylhexyllaktat noch Butyrolacton alle Bestandteile offenbart. Ebenfalls bekannt sind wässrige Mikroemulsionen von Pyrethroiden aus EP 0 257 286 und EP 0 500 401. Beide Veröffentlichungen offenbaren aber nicht die Benutzung von Co-Solventien, insbesondere nicht von Gamma-Butyrolacton oder Ethylhexyllaktat. Auch andere Formulierungen von bestimmten Pyrethroiden sind bekannt, z.B. aus WO 01/70024, dabei handelt es sich allerdings um wässrige Formulierungen, während die erfindungsgemäßen Formulierungen nicht-wässrig sind.

Diese vorbeschriebenen Formulierungen besitzen nicht immer die gewünschte biologische Wirksamkeit und Regenbeständigkeit.

Es wurden neue nicht-wässrige Zusammensetzungen gemäss Anspruch 1 gefunden. Gegenüber den im Stand der Technik beschriebenen EC-Formulierungen von Pyrethroiden weisen die erfindungsgemäßen Formulierungen einen hohen Anteil an bestimmten Tensiden und mindestens ein polares Co-Solvens auf. Dieses ermöglicht nicht nur die Bildung einer Emulsion nach Verdünnen der Formulierungen in Wasser, sondern führt auch zu. verbesserter Regenbeständigkeit und verbesserter biologischer Wirksamkeit.

Es wurde außerdem gefunden, dass sich die erfindungsgemäßen Formulierungen herstellen lassen, indem man die angegebenen Bestandteile bis zum Vorliegen einer homogenen Lösung mischt.

In einer bevorzugten Ausführungsform enthalten die erfindungsgemäßen Formulierungen als agrochemischen Wirkstoff mindestens einen Wirkstoff ausgewählt aus Acrinathrin, Alphacypermethrin, Beta-Cyfluthrin, Gamma-Cyhalothrin, Cypermethrin, Deltamethrin, Esfenvalerat, Ethofenprox, Fenpropathrin, Fenvalerat, Flucythrinat, Lambda-Cyhalothrin, Permethrin, Tau-Fluvalinat, Tralomethrin, Zeta-Cypermethrin, Cyfluthrin, Bifenthrin, Cycloprothrin, Eflusilanat, Fubfenprox, Pyrethrin, Resmethrin und Tefluthrin.

In einer besonders bevorzugten Ausführungsform enthalten die erfindungsgemäßen Formulierungen als agrochemischen Wirkstoff Beta-Cyfluthrin und/oder Deltamethrin.

Die Tenside sind Alkanol-Alkoxylate der Formel

R-O-(-AO)ₘR' (I)

in welcher
- R: für geradkettiges oder verzweigtes Alkyl mit 4 bis 20 Kohlenstoffatomen steht,
- R': für H, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid- Rest oder für Gemische aus Ethylenoxid- und Propylenoxid-Resten oder Butylenoxid-Resten steht und
- m: für Zahlen von 2 bis 30 steht.

Eine bevorzugte Gruppe von Tensiden sind Alkanol-Alkoxylate der Formel

R-O-(-EO-)ₙ-R' (I-a)

in welcher
- R: die oben angegebene Bedeutung hat,
- R': die oben angegebene Bedeutung hat,
- EO: für CH₂-CH₂-O- steht und
- n: für Zahlen von 2 bis 20 steht.

Eine besonders bevorzugte Gruppe von Tensiden sind Alkanol-Alkoxylate der Formel (I-a), in welcher n für Zahlen von 6 bis 17 steht.

Eine ganz besonder bevorzugte Gruppe von Tensiden sind Isotridecanol-Alkoxylate der Formel (I-a-1)

C₁₃H₂₇ -O-(-CH₂-CH₂-O-)ᵤ-H (I-a-1)

in welcher
- u: für den Durchschnittswert 8,4 steht,
oder der Formel (I-a-2)

C₁₃H₂₇-O-(-CH₂-CH₂-O-)ᵤ-H (I-a-2)

in welcher
- u: für den Durchschnittswert 15 steht.

In einer bevorzugten Ausführungsform enthalten die erfindungsgemäßen Formulierungen als nicht-wassermischbares Lösemittel ein aromatisches organisches Lösemittel oder eine Mischung von aromatischen organischen Lösemitteln. Solche Lösungsmittel sind z.B. unter dem Namen Solvesso ® kommerziell erhältlich

In einer weiteren bevorzugten Ausführungsform enthalten die erfindungsgemäßen Formulierungen als nicht-wassermischbares Lösemittel ein aromatisches organisches Lösemittel und als polares Co-Solvens mindestens eines ausgewählt aus Dimethylsulfoxid, N-Alkylpyrrolidon (z.B N-Methylpyrrolidon, N-Octylpyrrolidon), Gamma-Butyrolacton, Ethylhexylpalmitat, 2-Ethylhexyl-S-Laktat (im Folgenden auch vereinfacht als Ethylhexyllaktat oder EHL bezeichnet), Cyclohexanon und Dimethylpropylen-Harnstoff .

In einer weiteren bevorzugten Ausführungsform enthalten die erfindungsgemäßen Formulierungen als nicht-wassermischbares Lösemittel eine Mischung von aromatischen organischen Lösemitteln. Dimethylpropylen-Harnstoff .

Als polares Co-Solvens besonders bevorzugt ist Ethylhexyllaktat.

Als polares Co-Solvens besonders bevorzugt ist weiterhin Gamma-Butyrolacton.

Bevorzugt enthalten die erfindungsgemäßen Substanzen weiterhin mindestens einen anionischen Emulgator. Eingesetzt werden können alle üblicherweise in agrochemischen Mitteln einsetzbaren Substanzen. Bevorzugt sind Alkalimetall- und Erdalkalimetall-Salze von Alkylsulfonsäuren oder Alkylarylsulfonsäuren. Besonders bevorzugt sind Erdalkalimetall-Salze von Alkylarylsulfonsäuren.

Optional enthalten die erfindungsgemäßen Formulierungen weitere Zusatzstoffe aus den Gruppen der schaumhemmenden Mittel, der Antioxydantien und/oder der Farbstoffe.

Bevorzugt enthalten die erfindungsgemäßen Formulierungen ein schaumhemmendes Mittel. Als schaumhemmende Mittel kommen alle üblicherweise für diesen Zweck in agrochemischen Mitteln einsetzbaren Substanzen in Betracht. Bevorzugt sind Silikonöle und Magnesiumstearat. Wenn vorhanden, beträgt der Gehalt an schaumhemmendem Mittel üblicherweise 0,0001 bis 0,1 Gew.-%.

Als Antioxydantien kommen alle üblicherweise für diesen Zweck in agrochemischen Mitteln einsetzbaren Substanzen in Betracht. Bevorzugt ist Butylhydroxytoluol (2,6-di-t-butyl-4-methyl-phenol, BHT).

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

In den erfindungsgemäßen Formulierungen beträgt der Gehalt an Wirkstoff im Allgemeinen 0,5 bis 15 Gew.-%, bevorzugt 1 bis 10 Gew.-%, besonders bevorzugt 2 bis 6 Gew.-%.

In den erfindungsgemäßen Formulierungen beträgt der Gehalt an Tensid im Allgemeinen 10 bis 50 Gew.-% und bevorzugt 20 bis 30 Gew.-%.

In den erfindungsgemäßen Formulierungen beträgt der Gehalt an anionischem Emulgator im Allgemeinen 0 bis 15 Gew.-%, bevorzugt 1 bis 12 Gew.-%, besonders bevorzugt 1 bis 10 Gew.-%.

In den erfindungsgemäßen Formulierungen beträgt der Gehalt an Lösemitteln im Allgemeinen 30 bis 90 Gew.-%, bevorzugt 40 bis 80 Gew.-% und besonders bevorzugt 40 bis 70 Gew.-%. Diese Angabe steht dabei für den Gesamtgehalt an aromatischen organischen Lösungsmitteln und eventuell vorhandenem polaren Co-Solvens.

Hervorgehoben seien erfindungsgemäße Formulierungen enthaltend
- 2 bis 6 Gew.-% Deltamethrin und/oder Beta-Cyfluthrin
- 20 bis 30 Gew.-% Tensid aus der Gruppe der Alkoholethoxylate
- 40 bis 70 Gew.-% aromatisches organisches Lösemittel
- 1 bis zu 50 Gew.-% polares Co-Solvens / polare Co-Solventien
- 1 bis zu 12 Gew.-% eines anionischen Emulgators

Ebenfalls hervorgehoben seien erfindungsgemäße Formulierungen enthaltend
- 2 bis 6 Gew.-% Deltamethrin und/oder Beta-Cyfluthrin
- 20 bis 30 Gew.-% Tensid aus der Gruppe der Alkoholethoxylate
- 40 bis 70 Gew.-% aromatisches organisches Lösemittel
- 5 bis 50 Gew.-% Ethylhexyllaktat
- 1 bis 12 Gew.-% eines anionischen Emulgators

Die erfindungsgemäßen Zusammensetzungen eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp..

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp..

Aus der Ordnung der Chilopoda z.B. Geophilus spp., Scutigera spp..

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Stemechus spp., Symphyletes spp., Tenebrio molitor, Tribolium spp., Trogoderma spp., Tychius spp., Xylotrechus spp., Zabrus spp..

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp..

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrats, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp..

Aus der Ordnung der Isopoda z.B. Armadillidium vulgare, Oniscus asellus, Porcellio scaber.

Aus der Ordnung der Isoptera z.B. Reticulitermes spp., Odontotermes spp..

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp..

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp..

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp..

Erfindungsgemäße Zusammensetzungen können neben wenigstens einem Pyrethroid auch andere Wirkstoffe wie Insektizide, Lockstoffe, Sterilantien, Bakterizide, Akarizide, Nematizide, Fungizide, wachstumsregulierende Stoffe, Herbizide, Safener, Düngemittel oder Semiochemicals enthalten.

Besonders günstige Mischpartner sind z.B. die folgenden:

### Fungizide:

### Inhibitoren der Nucleinsäure Synthese

Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadikyl, Oxolinsäure

### Inhibitoren der Mitose und Zellteilung

Benomyl, Carbendazim, Diethofencarb, Fuberidazole, Pencycuron, Thiabendazol, Thiophanatmethyl, Zoxamid

### Inhibitoren der Atmungskette Komplex I

### Diflumetorim

### Inhibitoren der Atmungskette Komplex II

Boscalid, Carboxin, Fenfuram, Flutolanil, Furametpyr, Mepronil, Oxycarboxin, Penthiopyrad, Thifluzamid

### Inhibitoren der Atmungskette Komplex III

Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin, Trifloxystrobin

### Entkoppler

Dinocap, Fluazinam

### Inhibitoren der ATP Produktion

Fentinacetat, Fentinchlorid, Fentinhydroxid, Silthiofam

### Inhibitoren der Aminosäure- und Proteinbiosynthese

Andoprim, Blasticidin-S, Cyprodinil, Kasugamycin, Kasugamycinhydrochlorid Hydrat, Mepanipyrim, Pyrimethanil

### Inhibitoren der Signal-Transduktion

Fenpiclonil, Fludioxonil, Quinoxyfen

### Inhibitoren der Fett- und Membran Synthese

Chlozolinat, Iprodion, Procymidon, Vinclozolin

Ampropylfos, Kalium-Ampropylfos, Edifenphos, Iprobenfos (IBP), Isoprothiolan, Pyrazophos

Tolclofos-methyl, Biphenyl

Iodocarb, Propamocarb, Propamocarb hydrochlorid

### Inhibitoren der Ergosterol Biosynthese

### Fenhexamid,

Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol,

Aldimorph, Dodemorph, Dodemorphacetat, Fenpropimorph, Tridemorph, Fenpropidin, Spiroxamin,

Naftifin, Pyributicarb, Terbinafin

### Inhibitoren der Zellwand Synthese

Benthiavalicarb, Bialaphos, Dimethomorph, Flumorph, Iprovalicarb, Polyoxins, Polyoxorim, Validamycin A

### Inhibitoren der Melanin Biosynthese

Capropamid, Diclocymet, Fenoxanil, Phtalid, Pyroquilon, Tricyclazol

### Resistenzinduktion

Acibenzolar-S-methyl, Probenazol, Tiadinil

### Multisite

Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Folpet, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram

### Unbekannter Mechanismus

Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin -Natrium, Proquinazid, Pyrrolnitrin, Quintozen, Tecloftalam, Tecnazen, Triazoxid, Trichlamid, Zarilamid und 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1H-inden-1-yl)-1H-imidazole-5-carboxylat, 3,4,5-Trichlor-2,6-pyridindicarbonitril, Methyl 2-[[[cyclopropyl[(4-methoxyphenyl) imino]methyl]thio]methyl]-.alpha.-(methoxymethylen)- benzacetat, 4-Chloralpha-propinyloxy-N-[2-[3-methoxy-4-(2-propinyloxy)phenyl]ethyl]-benzacetamide, (2S)-N-[2-[4-[[3-(4-chtorophenyl)-2-propinyl]oxy]-3-methoxyphenyl]ethyl]- 3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1R)-1 ,2,2-trimethylpropyl] [1,2,4]triazolo[1,5-a]pyrimidin-7-amin, 5-Chlor-N-[(1R)-1,2-dimethylpropyl]-6-(2,4,6-trifluorophenyl) [1,2,4]triazolo[1,5-a]pyümidin-7-amine, N-[1-(5-Brom-3-chloropyridin-2-yl)ethyl]-2,4-dichloronicotinamid, N-(5-Brom-3-chlorpyridin-2-yl)methyl-2,4-dichlomicotinamid, 2-Butoxy-6-iod-3-propyl-benzopyranon-4-on, N-{(Z)-[(cyclopropylmethoxy)imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1Fluor-2-phenylethyl)oxy] phenyl] ethyliden]amino]oxylmethyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1H-imidazol-1- carbonsäure, O-[1-[(4-Methoxyphenoxy)methyl]-2,2-dimethylpropyl]-1H-imidazol- 1- carbothioic acid, 2-(2-{[6-(3-Chlor-2-methylphenoxy)-5-fluorpyrimidin-4-yl]oxy}phenyl)-2-(methoxyimino)-N-methylacetamid

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

### Acetylcholinesterase (AChE) Inhibitoren

Carbamate, zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate

Organophosphate, zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/ -ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion

### Natrium-Kanal-Modulatoren / Spannungsabhängige Natrium-Kanal-Blocker

### DDT

Oxadiazine, zum Beispiel Indoxacarb

Semicarbazon, zum Beispiel Metaflumizon (BAS3201)

### Acetylcholin-Rezeptor-Agonisten/-Antagonisten

Chloronicotinyle, zum Beispiel Acetamiprid, Clothianidin, Dinotefuran, Imidacloprid, Nitenpyram, Nithiazine, Thiacloprid, Thiamethoxam

Nicotine, Bensultap, Cartap

### Acetylcholin-Rezeptor-Modulatoren

Spinosyne, zum Beispiel Spinosad

### GABA-gesteuerte Chlorid-Kanal-Antagonisten

Organochlorine, zum Beispiel Camphechlor, Chlordane, Endosulfan, Gamma-HCH, HCH, Heptachlor, Lindane, Methoxychlor

Fiprole, zum Beispiel Acetoprole, Ethiprole, Fipronil, Pyrafluprole, Pyriprole, Vaniliprole

### Chlorid-Kanal-Aktivatoren

Mectine, zum Beispiel Abamectin, Emamectin, Emamectin-benzoate, Ivermectin, Lepimectin, Milbemycin

Juvenilhormon-Mimetika, zum Beispiel Diofenolan, Epofenonane, Fenoxycarb, Hydroprene, Kinoprene, Methoprene, Pyriproxifen, Triprene

### Ecdysonagonisten/disruptoren

Diacylhydrazine, zum Beispiel Chromafenozide, Halofenozide, Methoxyfenozide, Tebufenozide

### Inhibitoren der Chitinbiosynthese

Benzoylharnstoffe, zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron

### Buprofezin

### Cyromazine

Inhibitoren der oxidativen Phosphorylierung, ATP-Disruptoren

### Diafenthiuron

Organozinnverbindungen, zum Beispiel Azocyclotin, Cyhexatin, Fenbutatin-oxide

Entkoppler der oxidativen Phoshorylierung durch Unterbrechung des H-Protongradienten Pyrrole, zum Beispiel Chlorfenapyr

Dinitrophenole, zum Beispiel Binapacyrl, Dinobuton, Dinocap, DNOC

### Seite-I-Elektronentransportinhibitoren

METI's, zum Beispiel Fenazaquin, Fenpyroximate, Pyrimidifen, Pyridaben, Tebufenpyrad, Tolfenpyrad

### Hydramethylnon

### Dicofol

### Seite-II-Elektronentransportinhibitoren

Rotenone

### Seite-III-Elektronentransportinhibitoren

Acequinocyl, Fluacrypyrim

### Mikrobielle Disruptoren der Insektendarmmembran

### Bacillus thuringiensis-Stämme

### Inhibitoren der Fettsynthese

Tetronsäuren,

zum Beispiel Spirodiclofen, Spiromesifen,

### Tetramsäuren, zum Beispiel Spirotetramat, cis-3-(2,5-dimethylphenyl)-4-hydroxy-8-methoxy-1-azaspiro[4.5]dec-3-en-2-on

Carboxamide, zum Beispiel Flonicamid

Oktopaminerge Agonisten, zum Beispiel Amitraz

Inhibitoren der Magnesium-stimulierten ATPase,

### Propargite

Nereistoxin-Analoge, zum Beispiel Thiocyclam hydrogen oxalate, Thiosultap-sodium

Agonisten des Ryanodin-Rezeptors,

Benzoesäuredicarboxamide, zum Beispiel Flubendiamid

### Anthranilamide, zum Beispiel Rynaxypyr (3-bromo-N-{4-chloro-2-methyl-6-[(methylamino)carbonyl]phenyl}-1-(3-chloropyridin-2-yl)-1H-pyrazole-5-carboxamide)

### Biologika, Hormone oder Pheromone

Azadirachtin, Bacillus spec., Beauveria spec., Codlemone, Metarrhizium spec., Paecilomyces spec., Thuringiensin, Verticillium spec.

### Wirkstoffe mit unbekannten oder nicht spezifischen Wirkmechanismen

Begasungsmittel, zum Beispiel Aluminium phosphide, Methyl bromide, Sulfuryl fluoride

Fraßhemmer, zum Beispiel Cryolite, Flonicamid, Pymetrozine

Milbenwachstumsinhibitoren, zum Beispiel Clofentezine, Etoxazole, Hexythiazox

Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin

Die erfindungsgemäßen Zusammensetzungen können ferner Synergisten enthalten. Synergisten sind Verbindungen, durch die die Wirkung der Wirkstoffe gesteigert wird, ohne daß der zugesetzte Synergist selbst aktiv wirksam sein muß.

Die erfindungsgemäßen Zusammensetzungen können ferner Hemmstoffe enthalten, die einen Abbau des Wirkstoffes nach Anwendung in der Umgebung der Pflanze, auf der Oberfläche von Pflanzenteilen oder in pflanzlichen Geweben vermindern.

Die Anwendung geschieht in einer der Formulierung angepaßten üblichen Weise.

Erfindungsgemäß können alle Pflanzen und Pflanzenteile behandelt werden. Unter Pflanzen, werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Die erfindungsgemäße Behandlung der Pflanzen und Pflanzenteile mit den Zusammensetzungen erfolgt direkt oder durch Einwirkung auf deren Umgebung, Lebensraum oder Lagerraum nach den üblichen Behandlungsmethoden, z.B. durch Tauchen, Sprühen, Vernebeln, Aufstreichen oder Injizieren.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Die Begriffe "Teile" bzw. "Teile von Pflanzen" oder "Pflanzenteile" wurden oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäßen Zusammensetzungen, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Zuckerrüben, Tomaten, Erbsen und andere Gemüsesorten, Baumwolle, Tabak, Raps, sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid- resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Zusammensetzungen behandelt werden. Die oben angegebenen Vorzugsbereiche gelten auch für die Behandlung dieser Pflanzen. Besonders hervorgehoben sei die Pflanzenbehandlung mit den im vorliegenden Text speziell aufgeführten Zusammensetzungen.

Die erfindungsgemäßen Zusammensetzungen wirken nicht nur gegen Pflanzen-, Hygiene- und Vorratsschädlinge, sondern auch auf dem veterinärmedizinischen Sektor gegen tierische Parasiten (Ekto- und Endoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp..

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp..

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gastetophilus spp., Hippobosca spp., Lipoptena spp., Melophagus spp..

Aus der Ordnung der Siphonapterida z.B. Pulex spp., Ctenocephalides spp., Xenopsylla spp., Ceratophyllus spp..

Aus der Ordnung der Heteropterida z.B. Cimex spp., Triatoma spp., Rhodnius spp., Panstrongylus spp..

Aus der Ordnung der Blattarida z.B. Blatta orientalis, Periplaneta americana, Blattela germanica, Supella spp..

Aus der Unterklasse der Acari (Acarina) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp..

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp..

Die erfindungsgemäßen Zusammensetzungen eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Zusammensetzungen eine wirtschaftlichere und einfachere Tierhaltung möglich ist.

Außerdem wurde gefunden, daß die erfindungsgemäßen Zusammensetzungen eine hohe insektizide Wirkung gegen Insekten zeigen, die technische Materialien zerstören.

Beispielhaft und vorzugsweise - ohne jedoch zu limitieren - seien die folgenden Insekten genannt:
Käfer wie Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;
Hautflügler wie Sirexjuvencus, Urocerus gigas, Urocerus gigas taignus, Urocerus augur;
Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;
Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Die anwendungsfertigen Mittel können gegebenenfalls noch weitere Insektizide und gegebenenfalls noch ein oder mehrere Fungizide enthalten.

Hinsichtlich möglicher zusätzlicher Zumischpartner sei auf die oben genannten Insektizide und Fungizide verwiesen.

Zugleich können die erfindungsgemäßen Zusammensetzungen zum Schutz vor Bewuchs von Gegenständen, insbesondere von Schiffskörpern, Sieben, Netzen, Bauwerken, Kaianlagen und Signalanlagen, welche mit See- oder Brackwasser in Verbindung kommen, eingesetzt werden.

Weiter können die erfindungsgemäßen Zusammensetzungen allein oder in Kombinationen mit anderen Wirkstoffen als Antifouling-Mittel eingesetzt werden.

Die Zusammensetzungen eignen sich auch zur Bekämpfung von tierischen Schädlingen im Haushalts-, Hygiene- und Vorratsschutz, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge allein oder in Kombination mit anderen Wirk- und Hilfsstoffen in Haushaltsinsektizid-Produkten verwendet werden. Sie sind gegen sensible und resistente Arten sowie gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Ornithodorus moubat, Rhipicephalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp..

Aus der Ordnung der Chilopoda z.B. Geophilus spp..

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleoptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura z.B. Pediculus humanus capitis, Pediculus humanus corporis, Pemphigus spp., Phylloera vastatrix, Phthirus pubis.

Aus der Ordnung der Heteroptera z.B. Cimex hemipterus, Cimex lectularius, Rhodinus prolixus, Triatoma infestans.

Die Anwendung im Bereich der Haushaltsinsektizide erfolgt allein oder in Kombination mit anderen geeigneten Wirkstoffen wie Phosphorsäureestem, Carbamaten, Neo-nicotinoiden, Wachstumsregulatoren oder Wirkstoffen aus anderen bekannten Insektizidklassen.

### Herstellungsbeispiele

| | 1 | 2 | 3 | 4 | 5 | 6 | 7 | 8 | 9 | 10 |
|---|---|---|---|---|---|---|---|---|---|---|
| Deltamethrin | 2,6 | 2,6 | 2,6 | 2,6 | 2,6 | 2,6 | 2,6 | 2,6 | 2,6 | 2,6 |
| (I-a-1) | 24 | 24 | 24 | 24 | 48 | | 24 | 24 | 24 | 24 |
| (I-a-2) | | | | | | 48 | | | | |
| EHL | | 10 | 24 | | | | | 10 | | 10 |
| Gamma-Butyrolacton | | | | 25 | 25 | | 5 | | 5 | |
| Ethylhexylpalmitat | | | | 24 | | | | | | |
| Phenylsulfonat CA | 6 | 6 | 6 | 6 | 6 | 6 | | | | |
| Phenylsulfonat CAL | | | | | | | 6 | 6 | 6 | 6 |
| Dimethyl-Polysiloxan | | | | | | | | | 0,01 | 0,01 |

Alle Formulierungen werden mit Lösemittel (Solvesso®) aufgefüllt.

Alle Angaben in Gew.-%

### Anwendungsbeispiele

### Beispiel A

### Heliothis armigera - Test

Zur Herstellung einer zweckmäßigen Applikationslösung vermischt man den gewünschten Anteil formulierter Ware mit Wasser auf die gewünschte Konzentration.

Baumwollpflanzen (*Gossypium herbaceum*) werden mit der Applikationslösung in der gewünschten Konzentration gespritzt und nach dem Abtrocknen des Spritzbelages mit dem 2. beziehungsweise 3. Larvenstadium des Baumwollkapselwurms (*Heliothis armigera*) besetzt.

Nach der gewünschten Zeit wird die Wirkung in % bestimmt. Dabei bedeutet 100 %, dass alle Raupen abgetötet wurden; 0 % bedeutet, dass keine Raupe abgetötet wurde.

Bei diesem Test zeigten z. B. die folgenden Formulierungen der Herstellungsbeispiele überlegene Wirksamkeit gegenüber dem Stand der Technik: Formulierungen 1, 2 und 3

**Tabelle A1**

| **Heliothis armigera -Test, 2. Larvenstadium** | | |
|---|---|---|
| Formulierung | Wirkstoffkonzentration in g ai/ha | Abtötungsgrad in % nach 1^{d} |
| **Formulierung 1** erfindungsgemäß | 7,5 | 90 |
| **Formulierung 2** erfindungsgemäß | 7,5 | 80 |
| **Formulierung 3** erfindungsgemäß | 7,5 | 90 |
| **Decis® EC 025 Standard** Stand der Technik | 7,5 | 50 |

**Tabelle A2**

| **Heliothis armigera -Test, 3. Larvenstadium** | | |
|---|---|---|
| Formulierung | Wirkstoffkonzentration in g ai/ha | Abtötungsgrad in % nach 2^{h} |
| **Formulierung 1** erfindungsgemäß | 3,75 | 40 |
| **Formulierung 2** erfindungsgemäß | 3,75 | 50 |
| **Formulierung 3** erfindungsgemäß | 3,75 | 30 |
| **Decis® EC 025 Standard** Stand der Technik | 3,75 | 10 |

### Beispiel B

### Adulte Phaedon cochleariae - Test

Zur Herstellung einer zweckmäßigen Applikationslösung vermischt man den gewünschten Anteil formulierter Ware mit Wasser auf die gewünschte Konzentration.

Kohlpflanzen (*Brassica oleracea*) werden mit der Applikationslösung in der gewünschten Konzentration gespritzt und nach dem Abtrocknen des Belages mit adulten Käfern des Meerrettichblattkäfers (*Phaedon cochleariae*) besetzt.

Nach der gewünschten Zeit wird die Wirkung in % bestimmt. Dabei bedeutet 100 %, dass alle Käfer abgetötet wurden; 0 % bedeutet, dass kein Käfer abgetötet wurde.

Bei diesem Test zeigten z. B. die folgenden Formulierungen der Herstellungsbeispiele überlegene Wirksamkeit gegenüber dem Stand der Technik: Formulierungen 1, 2 und 3

**Tabelle B1**

| **Phaedon cochleariae -Test, Käfertest** | | |
|---|---|---|
| Formulierung | Wirkstoffkonzentration in g ai/hä | Abtötungsgrad in % nach 3^{d} |
| **Formulierung 1** erfindungsgemäß | 3,75 | 90 |
| **Formulierung 2** erfindungsgemäß | 3,75 | 90 |
| **Decis® EC 025 Standard** Stand der Technik | 3,75 | 60 |

**Tabelle B2**

| **Phaedon cochleariae -Test, Käfertest** | | |
|---|---|---|
| Formulierung | Wirkstoffkonzentration in g ai/ha | Abtötungsgrad in % nach 1^{d} |
| **Formulierung 1** erfindungsgemäß | 7,5 | 70 |
| **Formulierung 3** erfindungsgemäß | 7,5 | 90 |
| **Decis® EC 025 Standard** Stand der Technik | 7,5 | 50 |

### Beispiel C

### Spodoptera frugiperda-Test

Zur Herstellung einer zweckmäßigen Applikationslösung vermischt man den gewünschten Anteil formulierter Ware mit Wasser auf die gewünschte Konzentration.

Maispflanzen (*Zea mays*) werden mit der Applikationslösung in der gewünschten Konzentration gespritzt und nach dem Abtrocknen des Spritzbelages mit dem 2. beziehungsweise 3. Larvenstadium des Heerwurms (*Spodoptera frugiperda*) besetzt.

Nach der gewünschten Zeit wird die Wirkung in % bestimmt. Dabei bedeutet 100 %, dass alle Raupen abgetötet wurden; 0 % bedeutet, dass keine Raupe abgetötet wurde.

Bei diesem Test zeigten z. B. die folgenden Formulierungen der Herstellungsbeispiele überlegene Wirksamkeit gegenüber dem Stand der Technik: Formulierungen 1, 2 und 3

**Tabelle C1**

| **Spodoptera frugiperda -Test, 2. Larvenstadium** | | |
|---|---|---|
| Formulierung | Wirkstoffkonzentration in g ai/ha | Abtötungsgrad in % nach 2^{d} |
| **Formulierung 1** erfindungsgemäß | 7,5 | 90 |
| **Formulierung 2** erfindungsgemäß | 7,5 | 100 |
| **Formulierung 3** erfindungsgemäß | 7,5 | 100 |
| **Decis® EC 025 Standard** Stand der Technik | 7,5 | 70 |

**Tabelle C2**

| **Spodoptera frugiperda -Test, 3. Larvenstadium** | | |
|---|---|---|
| Formulierung | Wirkstoffkonzentration in g ai/ha | Abtötungsgrad in % nach 2^{d} |
| **Formulierung 1** erfindungsgemäß | 7,5 | 100 |
| **Formulierung 2** erfindungsgemäß | 7,5 | 100 |
| **Formulierung 3** erfindungsgemäß | 7,5 | 100 |
| **Decis® EC 025 Standard** Stand der Technik | 7,5 | 70 |

### Beispiel D

### Metopolophium dirhodum

Zur Herstellung einer zweckmäßigen Applikationslösung vermischt man den gewünschten Anteil formulierter Ware mit Wasser auf die gewünschte Konzentration.

Gerstenpflanzen (*Hordeum vulgare*), die stark mit einer gemischten Population von Getreide-blattläusen (*Metopolophium dirhodum*) besetzt sind, werden mit der Applikationslösung in der gewünschten Konzentration gespritzt.

Nach der gewünschten Zeit wird die Wirkung in % bestimmt. Dabei bedeutet 100 %, dass alle Blattläuse abgetötet wurden; 0 % bedeutet, dass keine Blattläuse abgetötet wurden.

Bei diesem Test zeigten z. B. die folgenden Formulierungen der Herstellungsbeispiele überlegene Wirksamkeit gegenüber dem Stand der Technik: Formulierungen 1, 4, 5 und 6

**Tabelle D1**

| pflanzenschädigende Insekten **Metopolophium dirhodum -Test** | | |
|---|---|---|
| Formulierung | Wirkstoffkonzentration in g ai/ha | Abtötungsgrad in % nach 2^{h} |
| **Formulierung 4** | 3,125 | 35 |
| **Formulierung 1** | 3,125 | 35 |
| **Formulierung 5** | 3,125 | 40 |
| **Decis® EC 025 Standard** Stand der Technik | 3,125 | 20 |

**Tabelle D2**

| pflanzenschädigende Insekten **Metopolophium dirhodum -Test** | | |
|---|---|---|
| Formulierung | Wirkstoffkon- Abtötungsgrad zentration in g ai/ha | in % nach 3^{d} |
| **Formulierung 6** | 3,125 | 57 |
| **Decis® EC 025 Standard** Stand der Technik | 3,125 | 43 |

### Beispiel E

### Regenfestigkeit: Sitobion avenae

Zur Herstellung einer zweckmäßigen Applikationslösung vermischt man den gewünschten Anteil formulierter Ware mit Wasser auf die gewünschte Konzentration.

Gerstenpflanzen (*Hordeum vulgare*) werden mit der Applikationslösung in der gewünschten Konzentration gespritzt und nach dem Antrocknen des Belages mit verschiedenen Wassermengen beregnet.

Nach dem Abtrocknen der Pflanzen werden die Blätter mit einer gemischten Population Getreideblattläuse (*Sitobion avenae*) besetzt.

Nach der gewünschten Zeit wird die Wirkung in % bestimmt. Dabei bedeutet 100 %, dass alle Blattläuse abgetötet wurden; 0 % bedeutet, dass keine Blattläuse abgetötet wurden.

Bei diesem Test zeigten z. B. die folgenden Formulierungen der Herstellungsbeispiele überlegene Regenfestigkeit gegenüber dem Stand der Technik:

**Tabelle E1**

| **Regenfestigkeit 6,35 l/m³: Sitobion avenae -Test** | | |
|---|---|---|
| Formulierung | Wirkstoffkonzentration in g ai/ha | Abtötungsgrad in % nach 1^{d} |
| **Formulierung 7** erfindungsgemäß | 15 | 80 |
| **Formulierung 8** erfindungsgemäß | 15 | 65 |
| **Decis® EC 025 Standard** Stand der Technik | 15 | 20 |

Formulierungen 9 und 10 zeigen bei ansonsten identischem Verhalten stark reduziertes Schäumen.

**Tabelle E2**

| **Regenfestigkeit 20 l/m³: Sitobion avenae -Test** | | |
|---|---|---|
| Formulierung | Wirkstoffkonzentration in g ai/ha | Abtötungsgrad in % nach 2^{d} |
| **Formulierung 7** erfindungsgemäß | 15 | 95 |
| **Formulierung 8** erfindungsgemäß | 15 | 70 |
| **Decis® EC 025 Standard** Stand der Technik | 15 | 60 |

Formulierungen 9 und 10 zeigen bei ansonsten identischem Verhalten stark reduziertes Schäumen.

## Patentansprüche

1. Nicht-wässrige Zusammensetzung, umfassend
- mindestens einen agrochemischen Wirkstoff aus der Gruppe der Pyrethroide,
- mindestens ein Tensid der Formel (I)
R-O-(-AO)ₘR' (I)
in welcher
R für geradkettiges oder verzweigtes Alkyl mit 4 bis 20 Kohlenstoffatomen steht,
R' für H, Ethyl, Ethyl, n-Propyl, i-Propyl, n-Butyl, i-Butyl, t-Butyl, n-Pentyl oder n-Hexyl steht,
AO für einen Ethylenoxid-Rest, einen Propylenoxid-Rest, einen Butylenoxid- Rest oder für Gemische aus Ethylenoxid- und Propylenoxid-Resten oder Butylenoxid-Resten steht und
m für Zahlen von 2 bis 30 steht,
- mindestens ein nicht-wassermischbares Lösemittel,
- mindestens einen anionischen Emulgator,
- mindestens ein polares Co-Solvens ausgewählt aus Dimethylsulfoxid, N-Alkylpyrrolidon, Gamma-Butyrolacton, Ethylhexylpalmitat 2-Ethylhexyl-S-Laktat, Cyclohexanon und Dimethylpropylen-Hamstoff.

2. Zusammensetzung gemäß Anspruch 1, enthaltend Beta-Cyfluthrin und/oder Deltamethrin.

3. Zusammensetzung gemäß einem der Anspruch 1 oder 27, **dadurch gekennzeichnet, dass** der anionische Emulgator ein Alkalimetall- oder Erdalkalimetall-Salze einer Alkykulfonsäure oder Alkylarylsulfonsäure ist.

4. Zusammensetzung gemäß einem der Ansprüche 1 bis 3, **dadurch gekennzeichnet, dass** das Tensid ein Isotridecanol-Alkoxylate der Formel (I-a-1)
C₁₃H₂₇-O-(CH₂-CH₂-O-)u-H (I-a-1)
in welcher
u für den Durchschnittswert 8,4 steht,
oder der Formel (I-a-2)
C₁₃H₂₇-O-(CH₂CH-CH₂-O-)ᵤ-H (I-a-2)
in welcher
u für den Durchschnittswert 15 steht, ist,

5. Zusammensetzung gemäß einem der Ansprüche 1 bis 4, **dadurch gekennzeichnet, dass**
- der Gehalt an Wirkstoff 2 bis 6 Gew.-% beträgt, und
- der Gehalt an Tensid 20 bis 50 Gew.-% beträgt, und
- der Gehalt an anionischem Emulgator 1 bis 12 Gew.-% beträgt, und
- die Zusammensetzung mindestens ein aromatisches organisches Lösemittel enthält, wobei die Summe der Gehalte an aromatischem Lösemittel und polarem Co-Solvens 40 bis 70 Gew.-% beträgt.

6. Verfahren zur Bekämpfung tierischer Schädlinge, **dadurch gekennzeichnet, dass** durch Ausbringen einer unverdünnten oder verdünnten Zusammensetzung gemäß einem oder mehreren der Ansprüche 1 bis 3 auf Pflanzen, ihren Lebensraum, ihr Saatgut oder Schädlinge eine wirksame Menge mindestens eines agrochemischen Wirkstoffs ausgebracht wird.

7. Verwendung einer Zusammensetzung gemäß einem oder mehreren der Ansprüche 1 bis 3 zur Bekämpfung tierischer Schädlinge, **dadurch gekennzeichnet, dass** durch Ausbringen einer unverdünnten oder verdünnten Zusammensetzung gemäß einem oder mehreren der Ansprüche 1 bis 3 auf Pflanzen, ihren Lebensraum, Saatgut oder Schädlinge eine wirksame Menge mindestens eines agrochemischen Wirkstoffs appliziert wird.

## Claims

1. Non-aqueous composition comprising
- at least one active agrochemical compound from the group of the pyrethroids,
- at least one surfactant of the formula (I)
R-O-(-AO)ₘR' (I)
in which
R stands for straight-chain or branched alkyl having 4 to 20 carbon atoms,
R' stands for H, methyl, ethyl, n-propyl, isopropyl, n-butyl, isobutyl, tert-butyl, n-pentyl or n-hexyl,
AO stands for an ethylene oxide radical, a propylene oxide radical, a butylene oxide radical or for mixtures of ethylene oxide and propylene oxide radicals or butylene oxide radicals and
m stands for numbers from 2 to 30,
- at least one water-immiscible solvent,
- at least one anionic emulsifier,
- at least one polar co-solvent selected from dimethyl sulphoxide, N-alkylpyrrolidone, gamma-butyrolactone, ethylhexyl palmitate, 2-ethylhexyl S-lactate, cyclohexanone and dimethylpropyleneurea.

2. Composition according to Claim 1, comprising beta-cyfluthrin and/or deltamethrin.

3. Composition according to one of Claims 1 and 2, **characterized in that** the anionic emulsifier is an alkali metal salt or alkaline earth metal salt of an alkylsulfonic acid or alkylarylsulfonic acid.

4. Composition according to one of Claims 1 to 3, **characterized in that** the surfactant is an isotridecanol alkoxylate of the formula (I-a-1)
C₁₃H₂₇ -O-(-CH₂-CH₂-O-)ᵤ-H (I-a-1)
in which
u stands for the average value 8.4,
or of the formula (I-a-2)
C₁₃H₂₇ -O-(-CH₂-CH₂-O-)ᵤ-H (I-a-2)
in which
u stands for the average value 15.

5. Composition according to one of Claims 1 to 4, **characterized in that**
- the content of active compound is 2% to 6% by weight, and
- the content of surfactant is 20% to 50% by weight, and
- the content of anionic emulsifier is 1% to 12% by weight, and
- the composition contains at least one aromatic organic solvent, the sum of the contents of aromatic solvent and polar co-solvent being 40% to 70% by weight.

6. Method of controlling animal pests, **characterized in that** an effective amount of at least one active agrochemical compound is delivered by delivering a neat or dilute composition according to one or more of Claims 1 to 3 to plants, their habitat, their seed or pests.

7. Use of a composition according to one or more of Claims 1 to 3 to control animal pests, **characterized in that** an effective amount of at least one active agrochemical compound is applied by delivering a neat or dilute composition according to one or more of Claims 1 to 3 to plants, their habitat, seed or pests.

## Revendications

1. Composition non aqueuse comprenant
- au moins un principe actif agrochimique du groupe des pyréthroïdes,
- au moins un tensioactif de la formule (I)
R-O-(-AO)ₘR' (I)
dans laquelle
R représente un groupe alkyle linéaire ou ramifié avec de 4 à 20 atomes de carbone,
R' représente H, un groupe méthyle, éthyle, n-propyle, i-propyle, n-butyle, i-butyle, t-butyle, n-pentyle ou n-hexyle,
AO représente un reste oxyde d'éthylène, un reste oxyde de propylène, un reste oxyde de butylène ou des mélanges de restes oxyde d'éthylène et oxyde de propylène ou de restes oxyde de butylène et
m représente un nombre de 2 à 30,
- au moins un solvant non miscible à l'eau,
- au moins un émulsionnant anionique,
- au moins un co-solvant polaire choisi parmi le diméthyl-sulfoxyde, une N-alkylpyrrolidone, la gamma-butyrolactone, le palmitate d'éthylhexyle, le S-lactate de 2-éthylhexyle, la cyclohexanone et la diméthylpropylène-urée.

2. Composition selon la revendication 1 contenant de la bêta-cyfluthrine et/ou de la deltaméthrine.

3. Composition selon la revendication 1 ou 2, **caractérisée en ce que** l'émulsionnant anionique est un sel de métal alcalin ou de métal alcalino-terreux d'un acide alkylsulfonique ou d'un acide alkylarylsulfonique.

4. Composition selon l'une quelconque des revendications 1 à 3, **caractérisée en ce que** le tensioactif est un alcoxylate d'isotridécanol de la formule (I-a-1)
C₁₃H₂₇-O-(-CH₂-CH₂-O-)ᵤ-H (I-a-1)
dans laquelle
u a la valeur moyenne de 8,4,
ou de la formule (I-a-2)
C₁₃H₂₇-0-(-CH₂-CH₂-O-)ᵤ-H (I-a-2)
dans laquelle
u a la valeur moyenne de 15.

5. Composition selon l'une quelconque des revendications 1 à 4, **caractérisée en ce que**
- la teneur en principe actif est de 2 à 6 % en masse, et
- la teneur en tensioactif est de 20 à 50 % en masse, et
- la teneur en émulsionnant anionique est de 1 à 12 % en masse, et
- la composition contient au moins un solvant organique aromatique, la somme des teneurs en solvant aromatique et en co-solvant polaire étant de 40 à 70 % en masse.

6. Procédé pour combattre des parasites animaux, **caractérisé en ce que** l'on applique par application d'une composition non diluée ou diluée selon l'une ou plusieurs des revendications 1 à 3 sur des plantes, leur biotope, leur semence ou leurs parasites une quantité efficace d'au moins un principe actif agrochimique.

7. Utilisation d'une composition selon l'une ou plusieurs des revendications 1 à 3 pour combattre des parasites animaux, **caractérisée en ce que** l'on applique par application d'une composition non diluée ou diluée selon l'une ou plusieurs des revendications 1 à 3 sur des plantes, leurs biotope, semence ou parasites une quantité efficace d'au moins un principe actif agrochimique.
